# EUROPÄISCHE PATENTANMELDUNG

(11) **EP 2 949 832 A1**
(43) Veröffentlichungstag der Anmeldung: **02.12.2015**
(21) Anmeldenummer: 14169929.8
(22) Anmeldetag: 27.05.2014
(51) Int. Cl.: E04F 15/18, E04F 15/20, E04F 15/04, B32B 21/04, E04F 15/10

(54) **Trittschallplatte**

(71) Anmelder: Ulrich Windmöller Consulting GmbH, 33758 Schloß Holte-Stukenbrock (DE)
(72) Erfinder: Windmöller, Ulrich, 33758 Schloß Holte-Stukenbrock (DE)
(74) Vertreter: Ter Meer Steinmeister & Partner

(57) **Zusammenfassung**

Die vorliegende Erfindung betrifft eine Trittschallplatte (12,14) zur Unterlage unter einem Fußbodenbelag, umfassend eine Trägerplatte (22) aus einem Holzwerkstoff und eine auf der Unterseite der Trägerplatte (22) angeordnete Schicht (24) aus einem Kunststoffschaum. Die Erfindung betrifft ferner ein Verfahren zur Herstellung einer entsprechenden Trittschallplatte, ein Trittschallplatten-Gebinde und eine Fußbodenkonstruktion.

## Beschreibung

Die vorliegende Erfindung betrifft eine Trittschallplatte zur Unterlage unter einem Fußbodenbelag. Ferner betrifft die Erfindung ein Verfahren zur Herstellung einer derartigen Trittschallplatte, ein Trittschallplatten-Gebinde und eine Fußbodenkonstruktion, die solche Trittschallplatten enthält.

Bodenbeläge werden gewöhnlich auf einer Unterkonstruktion verlegt, die die Funktion einer Trittschalldämmung und/oder einer thermischen Isolierung übernimmt. Diese thermisch und/oder akustisch isolierende Schicht kann beispielsweise durch einen Estrich gebildet werden, der auf dem tragenden Unterboden vergossen wird und aushärtet. Auf dem Estrich kann anschließend beispielsweise ein Bodenbelag aus einzelnen Fußbodenpaneelen verlegt werden. Auch Bodenbeläge in Form einer Bahnenware, wie etwa Textilbeläge oder dergleichen, werden gewöhnlich auf einem Estrich verlegt. Der Estrich hat zusätzlich die Funktion, Unebenheiten des tragenden Unterbodens auszugleichen, wie etwa in der darunter befindlichen Betonschicht.

Nachteilig ist hierbei die relativ lange Aushärtzeit des vergossenen Estrichs, die das Verlegen des Fußbodenbelags verzögert, sowie der Arbeitsaufwand bei der Erstellung des Estrichbelags.

Die vorliegende Erfindung ist insbesondere in Räumen mit häufig wechselnder Nutzung ein Vorteil, da es hier erforderlich sein kann, die Fußbodenkonstruktion abhängig von der Art der Raumnutzung verändern zu können. Bekannt ist u. a. der Einsatz von Trittschallmatten als Bahnenware zur akustischen Dämmung. Eine flexible Bahnenware weist jedoch den Nachteil auf, dass sie nicht die erforderliche Druckstabilität aufweist. Trittschallmatten eignen sich grundsätzlich nur für bestimmte Anwendungsfälle, etwa als Unterkonstruktion bei der Verlegung von Laminatfußböden.

Aufgabe der vorliegenden Erfindung ist es daher, eine Unterlage für einen Fußbodenbelag zu schaffen, die eine gut akustische und/oder thermische Dämmung bietet, schnell und einfach verlegbar ist und leicht rückbaubar ist. Insbesondere soll sich diese Unterkonstruktion für viele verschiedene Arten von Fußbodenbelägen eignen, etwa für Laminat- und Parkettfußböden, textile und elastische Beläge, wie Gummi, Linoleum und PVC. Die Vorteile eines guten Ausgleichs von Unebenheiten auf dem tragenden Untergrund und einer guten Widerstandsfähigkeit gegenüber punktuellen Belastungen, etwa durch Mobiliar, sollen vereinigt werden.

Diese Aufgaben werden erfindungsgemäß durch eine Trittschallplatte mit den Merkmalen des Anspruchs 1 gelöst.

Die erfindungsgemäße Trittschallplatte umfasst eine Trägerplatte aus einem Holzwerkstoff und eine Schicht aus einem Kunststoffschaum, die flächig auf der Unterseite der Trägerplatte angeordnet ist. Die Begriffe "oben" und "unten" beziehen sich im Rahmen dieser Beschreibung und der Ansprüche auf die Orientierung der erfindungsgemäßen Trittschallplatte im verlegten Zustand zur Bildung einer Unterkonstruktion eines Fußbodens. Die Schicht aus Kunststoffschaum liegt dann auf einem tragenden Unterboden auf, wie etwa dem Beton- oder Estrichboden eines Raums. Aufgrund ihrer Schaumstruktur werden Unebenheiten dieses Unterbodens weitgehend ausgeglichen. Diese können sich in das Schaummaterial eindrücken, und der Kunststoffschaum passt sich an den Unterboden an, so dass die Trittschallplatte flach und satt auf dem Unterboden aufliegt.

Die Trägerplatte aus dem Holzwerkstoff verteilt hingegen die Last und weist eine druckfeste Oberfläche auf ihrer Oberseite auf, bedingt durch die Härte des Holzwerkstoffmaterials. Die erfindungsgemäße Trittschallplatte weist somit wenigstens zwei Schichten mit sehr unterschiedlichen Materialeigenschaften auf, nämlich die zumindest punktuell nachgiebige Kunststoffschaum-Schicht und die relativ starre und harte Trägerplatte, auf welcher der eigentliche Fußbodenbelag als Nutzschicht verlegt werden kann. Vorzugsweise handelt es sich um es größere Trittschallplatten-Elemente, um möglichst wenig Stoßansätze in der Unterkonstruktion zu haben.

Mehrere nebeneinander liegende Trittschallplatten können die Unterkonstruktion des Fußbodens bilden. Die nebeneinander liegenden Trittschallplatten können miteinander verbunden sein, etwa durch entsprechende ineinander greifende Profilierungen an ihren Seitenkanten. Im Gegensatz zu einem vergossenen Estrich lassen sich die verlegten Trittschallplatten ohne weiteres wieder entfernen, da sie nicht mit dem Unterboden des Raums verklebt werden, sondern zum Rückbau einfach anhebbar und abtransportierbar sind. Die Konstruktion der Trittschallplatte ist so gewählt, dass die Eigenschaften der thermischen Dämmung und der Trittschalldämmung auf herkömmlichen Unterbodenkonstruktionen verbessert werden.

Vorzugsweise handelt es sich bei dem Holzwerkstoff um MDF, HDF, einen Holzfaserwerkstoff, einen Holzspanwerkstoff oder um einen Holzverbundwerkstoff, wie etwa WPC (Wood Plastic Composite - WPC wird verbreitet für Feuchtraumanwendungen eingesetzt). Derartige Holzwerkstoffe sind leicht verfügbar und relativ preiswert.

Die Trägerplatte hat bevorzugt eine Dicke von 4 bis 8 mm, vorzugsweise von 6,5 mm.

Weiter vorzugsweise hat die Trägerplatte ein Raumgewicht von 800 bis 1000 kg/m³.

Gemäß einer weiteren bevorzugten Ausführungsform der Erfindung handelt es sich bei dem Kunststoff des Kunststoffschaums um Polyethylen (PE), Polypropylen (PP), Polyurethan (PU) oder um extrudierten Polystyrol-Schaum (XPS). Diese Materialien können ggfs. aus nachwachsenden Rohstoffen erzeugt werden.

Weiter vorzugsweise weist die Schicht aus Kunststoffschaum eine Dicke von 1 mm bis 4 mm auf, vorzugsweise von 2,5 mm. Die Stärke und Beschaffenheit (Raumgewicht) des Schaumes sind massgebliche Faktoren für die Trittschallminderung.

Weiter vorzugsweise umfasst die erfindungsgemäße Trittschallplatte eine Klebstoffschicht, die zwischen der Trägerplatte und der Schicht aus Kunststoffschaum angeordnet ist. Diese Klebstoffschicht kann beispielsweise durch einen Dispersionskleber oder einem Heißschmelz-Kontaktkleber gebildet werden.

Weiter vorzugsweise weist die Trittschallplatte an ihren Seitenkanten ein Querschnittsprofil zur Verbindung mit einem dazu komplementären Querschnittsprofil einer weiteren Trittschallplatte auf. Nebeneinander liegende Trittschallplatten greifen somit an ihren Seitenkanten ineinander. Bei den Querschnittsprofilen kann es sich beispielsweise um Einwinkelprofile handeln. Bei diesen wird eine zu verlegende Trittschallplatte angewinkelt an eine bereits flache verlegte Trittschallplatte angesetzt, und die zu verbindenden Seitenkanten dieser Platten greifen während eines Abwinkelns der zu verlegenden Trittschallplatte ineinander, bis schließlich beide Trittschallplatten in einer gemeinsamen Ebene flach liegen. Im verlegten Zustand verhindern diese Querschnittsprofile ein seitliches Driften oder Verschieben der Trittschallplatten gegeneinander. Die Profilierung ist vorzugsweise auf Spezialmaschinen zu fertigen, die im 1/100stel Bereich zu verstellen sind, um im 1/10tel Bereich genaue Profile zu erstellen.

Weiter vorzugsweise weist das Querschnittsprofil eine Imprägnierung zum Schutz gegen Feuchtigkeit auf. Hierdurch wird ein Aufquellen des Holzwerkstoffs durch eindringende Feuchtigkeit verhindert. Darüber hinaus werden Knirsch- oder Knarrgeräusche, die durch auf den Bodenbelag gehende Personen entstehen können, stark verringert.

Gemäß einer bevorzugten Ausführungsform der vorliegenden Erfindung weist die Trittschallplatte eine Gesamtdicke von 5 mm bis 10 mm auf, vorzugsweise von 9 mm.

Ein erfindungsgemäßes Verfahren zur Herstellung einer derartigen Trittschallplatte umfasst die folgenden Schritte:
- Bereitstellung einer Trägerplatte aus einem Holzwerkstoff
- Aufbringen einer Schicht aus einem Kunststoffschaum auf die Trägerplatte durch Aufkleben oder Aufkaschieren,
- Pressen der mit der Kunststoffschaum-Schicht versehenen Trägerplatte für einen Zeitraum von 24 bis 48 Stunden.

Das Pressen der Trägerplatte hat die Funktion, Verzugsreaktionen nach dem Klebe- oder Kaschierprozess zu vermeiden. Das Aushärten einer Klebstoffschicht findet dann unter hohem Druck statt.

Gemäß einer bevorzugten Ausführungsform dieses Verfahrens werden vor dem Pressen mehrere mit der Kunststoffschaum-Schicht versehene Trägerplatten aufeinandergestapelt, und das Pressen wird durch eine Flächengewichtsbeaufschlagung des so entstandenen Stapels durchgeführt.

Die vorliegende Erfindung betrifft ferner ein Trittschallplatten-Gebinde, umfassend einen Stapel aus erfindungsgemäßen Trittschallplatten, eine Kartonage zur Aufnahme dieses Stapels und eine Schrumpffolie, die den Stapel enthaltene Kartonage dicht einhüllt. Die Schrumpffolie dichtet den Trittschallplatten-Stapel gut gegen Feuchtigkeit ab. Das gesamte Gebinde lässt sich leicht transportieren und handhaben.

Die vorliegende Erfindung betrifft ferner eine Fußbodenkonstruktion, umfassend eine Unterkonstruktion aus einer Anzahl dicht nebeneinander angeordneter und an ihren Seitenkanten verbundener Trittschallplatten der erfindungsgemäßen Art und einen darauf angeordneten Fußbodenbelag. Bei diesem Fußbodenbelag kann es sich beispielsweise um Laminat- oder Parkettpaneele aus einem Holzwerkstoff oder aus elastischen Kunststoffwerkstoffen handeln, wie Textil-, PVC-, Linoleum-, Gummi -Beläge oder dergleichen, die als Bahnen lose verlegt oder verklebt werden.

Vorzugsweise ist die Unterkonstruktion aus Trittschallplatten unmittelbar auf einem tragenden Unterboden eines Raums, insbesondere auf einer Beton- oder Estrich-Lastverteilerschicht liegend angeordnet, oder im Renovierungsbereich auf Holzunterkonstruktionen.

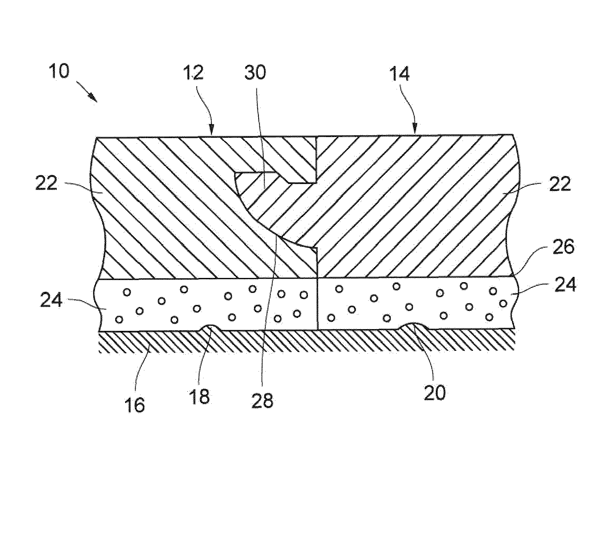

Im Folgenden wird ein bevorzugtes Ausführungsbeispiel der vorliegenden Erfindung anhand der Zeichnung näher erläutert.

Die einzige Figur zeigt einen Querschnitt durch einen Verbindungsbereich zweier miteinander verbundener Trittschallplatten, welche Ausführungsbeispiele der vorliegenden Erfindung darstellen.

Die Figur ist eine Teildarstellung einer Unterkonstruktion 10 einer nicht vollständig dargestellten Fußbodenkonstruktion, die ferner noch einen Fußbodenbelag als obere Nutzschicht umfasst, in der Figur aus Gründen der Übersichtlichkeit nicht dargestellt ist. Die Unterkonstruktion 10 umfasst eine Anzahl dicht nebeneinander angeordneter Trittschallplatten 12,14, die unmittelbar auf einer Lastverteilerschicht 16 aufliegen, die den Unterboden eines Raums bildet. Im vorliegenden Ausführungsbeispiel ist diese Lastverteilerschicht 16 eine Beton- oder Estrichschicht. Die Lastverteilerschicht 16 weist Unebenheiten 18,20 auf, die durch die Konstruktion der Trennschallplatten 12,14 ausgeglichen werden.

Jede der Trittschallplatten 12,14 umfasst eine Trägerplatte 22 aus einem Holzwerkstoff. Bei diesem Holzwerkstoff kann es sich um MDF, HDF, einen Holzfaserwerkstoff, einen Holzspanwerkstoff oder um einen Holzverbundwerkstoff bekannter Art handeln. Denkbar ist beispielsweise auch die Verwendung von WPC (Wood Plastic Composite). Die Trägerplatten 12,14 haben eine Dicke von 4 mm bis 8 mm, vorzugsweise von 6,5 mm, sowie ein Raumgewicht von 800 bis 1000 kg/m³. Das vergleichsweise hohe Raumgewicht in Verbindung mit der Starrheit und Steifigkeit des Holzwerkstoffmaterials der Trägerplatte 22 führen zu einer hohen Druckfestigkeit, insbesondere gegenüber Punktlasten, die von oben auf die Fußbodenkonstruktion wirken.

Auf der Unterseite der Trägerplatten 12,14 ist jeweils eine Schicht 24 aus einem Kunststoffschaum angeordnet. Bei dem Kunststoff dieser Schicht 24 kann es sich beispielsweise um Polyethylen (PE), Polypropylen (PP), Polyurethan (PU) oder um extrudierten Polystyrol-Schaum (XPS) handeln. Dieses Kunststoffmaterial wird aufgeschäumt und weist somit eine poröse Struktur mit Lufteinschlüssen auf. Hierdurch ist die Schicht 24 punktuell eindrückbar, kann jedoch eine gewisse Elastizität, d. h. ein Rückstellverhalten aufweisen.

Da die Schicht 24 aus Kunststoffschaum unmittelbar auf der Lastverteilerschicht 16 aufliegt, drücken sich die auf dem Unterboden erhabenen Unebenheiten 18,20 leicht in den Kunststoffschaum ein. Hierdurch wird es möglich, dass die Trittschallplatten 12,14 trotz der Unebenheiten 18,20 unmittelbar flach und sicher auf dem Unterboden aufliegen.

Die Trittschallplatte 12,14 hat in ihrer Gesamtheit eine thermisch dämmende Wirkung sowie die Wirkung einer Trittschalldämmung. Diese Wirkung ist einerseits durch das poröse Schaummaterial der Schicht 24 verursacht, insbesondere jedoch in Kombination mit der vergleichsweise harten, starren und kompakten Trägerplatte 22 aus Holzwerkstoff, die ein hohes Raumgewicht aufweist. Es hat sich gezeigt, dass insbesondere die Materialkombination aus einem harten, starren und dichten Material in der oberen Schicht der Trittschallplatte 12,14, welche den darauf angeordneten Fußbodenbelag trägt, mit der darunter angeordneten Schicht 24 aus einem Kunststoffschaum-Material gute Dämmungs- und Dämpfungseigenschaften bewirkt. An der Grenzfläche zwischen der Trägerplatte 22 und der Schicht 24 kann eine Reflexion bzw. Brechung der Schallwellen stattfinden. Versuche haben gezeigt, dass Trittschallplatten 12,14 der erfindungsgemäßen Art eine Trittschallreduktion von mindestens 20 bis 30 dB bewirken können.

Die Schicht 24 aus Kunststoffschaum kann eine Dicke von 1 mm bis 4 mm aufweisen, vorzugsweise 2,5 mm. Sie kann auf die Unterseite der Trägerplatte 22 aufkaschiert oder aufgeklebt sein, etwa durch eine Klebstoffschicht 26 zwischen der Trägerplatte 22 und der Schicht 24 aus Kunststoffschaum. Bei diesem Kleber kann es sich beispielsweise um einen Dispersionskleber oder einen "Hotmelt"-Kontaktkleber handeln.

Die in der Figur dargestellten Trittschallplatten 12,14 sind durch komplementäre Querschnittsprofile 28,30 an ihren einander zugewandten Seitenkanten miteinander verbunden, derart, dass ein Driften, also eine Verschiebung der einzelnen benachbarten Trittschallplatten 12,14 gegeneinander im verlegten Zustand nicht mehr möglich ist. Das im vorliegenden Ausführungsbeispiel verwendete Profil ist ein Nut-Feder-Verriegelungs-Profil, mit einer seitlich von der in der Figur rechts angeordneten Trittschallplatte 14 vorspringenden Feder 30 und einer komplementär ausgeformten Nut 28 in der Seitenkante der linken Trittschallplatte 12. Das durch die Nut 28 und die Feder 30 gebildete Profil stellt ein Einwinkelprofil dar, zu dessen Verlegung eine der beiden Trittschallplatten, also beispielsweise die rechte Trittschallplatte 14, an die bereits verlegte linke Trittschallplatte 12 derart angelegt wird, dass ihre zu verbindenden Seitenkanten gegeneinander liegen, die noch zu verlegende Trittschallplatte 14 jedoch in einen Winkel zwischen 30° und 45° gegenüber der horizontalen Ebene angehoben ist. Wird in dieser Position die rechte Trittschallplatte 14 abgesenkt, wird die Feder 30 in die Nut 28 hineingewinkelt, bis beide Trittschallplatten 12,14 in der gleichen Ebene auf dem Unterboden aufliegen, wie in der Figur dargestellt. Es versteht sich, dass die dargestellten Querschnittsprofile 28,30 vereinfacht dargestellt sind und die Nut-Feder-Verbindung lediglich schematisch darstellen sollen. Auf die genaue Art der Nut-Feder-Verbindung und der dabei ineinander greifenden komplementären Teile der Querschnittsprofile soll es für die Lehre der vorliegenden Erfindung nicht ankommen. Vorteilhaft ist es jedoch, wenn im Eingriffszustand der Querschnittsprofile 28,30 kein Auseinanderdriften der Trittschallplatten 12,14 mehr möglich ist, wie vorstehend bereits beschrieben.

Sowohl die Feder 30 als auch die Nut 28 können vorzugsweise eine Imprägnierung zum Schutz gegen das Eindringen von Feuchtigkeit aufweisen. Hierdurch wird ein Aufquellen des Holzwerkstoffs der Trägerplatten 22 verhindert.

Insgesamt kann die vorliegende Trittschallplatte eine Gesamtdicke von 5 mm bis 10 mm aufweisen, etwa von 9 mm.

Bei einem Verfahren zur Herstellung der hier dargestellten Trittschallplatten 12,14 wird zunächst jeweils eine Trägerplatte 22 aus einem Holzwerkstoff bereitgestellt, und anschließend die Schicht 24 aus einem Kunststoffschaum auf die Trägerplatte 22 aufkaschiert oder aufgeklebt. Anschließend wird das hierdurch entstandene Gebilde aus der Trägerplatte 22 und der Kunststoffschaum-Schicht 24 über einen längeren Zeitraum verpresst. Dies kann dadurch geschehen, dass mehrere Trägerplatten 22, auf welche bereits der Kunststoffschaum 24 aufgebracht ist, aufeinander gestapelt werden, und der Stapel mit einem Flächengewicht beaufschlagt wird, und zwar über einen Zeitraum von 24 bis 48 Stunden hinweg. Innerhalb dieses Zeitraums kann der Klebstoff zwischen der Kunststoffschaum-Schicht 24 und der Trägerplatte 22 aushärten.

Zur Herstellung eines Gebindes, das sich zur Lagerung und zum Transport der Trittschallplatte 12,14 eignet, wird ein Stapel von Trittschallplatten 12,14 zunächst in einer Kartonage verpackt und anschließend dicht mit einer Schrumpffolie eingehüllt, so dass keine Feuchtigkeit mehr in den Stapel eindringen kann.

Auf die in der Figur dargestellte Unterkonstruktion 10, die mehrere nebeneinander liegende und miteinander verbundene Trittschallplatten 12,14 auf einem Unterboden umfasst, kann ein beliebiger Fußbodenbelag angeordnet werden, der beispielsweise aus Holzwerkstoffen, wie Laminat oder Parkett, oder aus einem Textil-, PVC-, Linoleum-, Gummi-, PU-, Polyolefin-Belag besteht. Auch die Verlegung von Fliesen auf der Unterkonstruktion 10 ist ebenfalls möglich.

Die Unterkonstruktion 10 lässt sich leicht zurückbauen, indem die einzelnen Trittschallplatten 12,14 angehoben werden und die ineinandergreifenden Querschnittsprofile 28,30 voneinander gelöst werden. Die leichte Rückbaubarkeit prädestiniert die vorliegende Unterkonstruktion 10 aus Trittschallplatten 12,14 zum Einsatz in Bereichen, in denen der Wechsel des Bodenbelags möglich sein soll, also etwa im Ladenbau oder im Messebau. Auch für den Bereich von Hotels, in der Pflege, in Schulen oder anderen öffentlichen Bereichen ist der Einsatz vorteilhaft. Bei festen Verklebungen des Oberbelages mit der Trittschallplatte ist es beim Rückbau von Vorteil beide Materialien voneinander zu trennen und getrennt zu recyceln.

Die Holzwerkstoffe und die Kunststoffe, die zur Produktion der erfindungsgemäßen Trittschallplatte 12,14 eingesetzt werden, können aus nachhaltiger Produktion stammen. Insbesondere ist auch der Einsatz von Recyclingmaterialien ohne weiteres möglich. Die verwendeten Materialien können emissionsarm oder emissionsfrei sein.

Neben Einwinkelprofilen 28,30 können auch Einschlagprofile verwendet werden, die es zulassen, dass die jeweils eingesetzte Trittschallplatte 12,14 mit der bereits verlegten Trittschallplatte durch Einschlagen verbunden wird. Die Rückbaubarkeit durch das Lösen dieser Verbindung wird durch den Einsatz solcher Querschnittsprofile nicht beeinträchtigt.

## Patentansprüche

1. Trittschallplatte (12,14) zur Unterlage unter einem Fußbodenbelag, umfassend eine Trägerplatte (22) aus einem Holzwerkstoff und eine auf der Unterseite der Trägerplatte (22) angeordnete Schicht (24) aus einem Kunststoffschaum.

2. Trittschallplatte gemäß Anspruch 1, **dadurch gekennzeichnet, dass** es sich bei dem Holzwerkstoff um MDF, HDF, einen Holzfaserwerkstoff, einen Holzspanwerkstoff oder um einen Holzverbundwerkstoff (WPC) handelt.

3. Trittschallplatte gemäß Anspruch 1 oder 2, **dadurch gekennzeichnet, dass** die Trägerplatte (22) eine Dicke von 4 mm bis 8 mm, vorzugsweise 6,5 mm aufweist.

4. Trittschallplatte gemäß einem der Ansprüche 1 bis 3, **dadurch gekennzeichnet, dass** die Trägerplatte (22) ein Raumgewicht von 800 bis 1000 kg/m³ aufweist.

5. Trittschallplatte gemäß einem der vorhergehenden Ansprüche, **dadurch gekennzeichnet, dass** es sich bei dem Kunststoff des Kunststoffschaums um Polyethylen (PE) , Polyproylen (PP), Polyurethan (PU) oder um extrudierten Polystyrolschaum (XPS) handelt.

6. Trittschallplatte gemäß einem der vorhergehenden Ansprüche, **dadurch gekennzeichnet, dass** die Schicht aus Kunststoffschaum eine Dicke von 1 mm bis 4 mm, vorzugsweise 2,5 mm aufweist.

7. Trittschallplatte gemäß einem der vorhergehenden Ansprüche, **gekennzeichnet durch** eine Klebstoffschicht (26), die zwischen der Trägerplatte (22) und der Schicht aus Kunststoffschaum angeordnet ist.

8. Trittschallplatte gemäß einem der vorhergehenden Ansprüche, **dadurch gekennzeichnet, dass** die Trittschallplatte (12,14) an ihren Seitenkanten ein Querschnittsprofil (28 bzw. 30) zur Verbindung mit einem dazu komplementären Querschnittsprofil (30 bzw. 28) einer weiteren Trittschallplatte (12,14) aufweist.

9. Trittschallplatte gemäß Anspruch 8, **dadurch gekennzeichnet, dass** das Querschnittsprofil (28,30) eine Imprägnierung zum Schutz gegen Feuchtigkeit aufweist.

10. Trittschallplatte gemäß einem der vorhergehenden Ansprüche, **dadurch gekennzeichnet, dass** die Trittschallplatte (12,14) eine Gesamtdicke von 5 mm bis 10 mm, vorzugsweise 9 mm aufweist.

11. Verfahren zur Herstellung einer Trittschallplatte gemäß einem der vorhergehenden Ansprüche, **gekennzeichnet durch** die folgenden Schritte:
- Bereitstellung einer Trägerplatte (22) aus einem Holzwerkstoff,
- Aufbringen einer Schicht aus einem Kunststoffschaum auf die Trägerplatte (22) **durch** Aufkleben oder Aufkaschieren,
- Pressen der mit der Kunststoffschaum-Schicht versehenen Trägerplatte (22) über einen Zeitraum von 24 bis 48 Stunden.

12. Verfahren gemäß Anspruch 11, **dadurch gekennzeichnet, dass** vor dem Pressen mehrere mit der Kunststoffschaum-Schicht versehene Trägerplatten (22) aufeinander gestapelt werden und das Pressen durch eine Flächengewichtsbeaufschlagung des so entstandenen Stapels durchgeführt wird.

13. Trittschallplatten-Gebinde, umfassend einen Stapel aus Trittschallplatten (12,14) gemäß einem der Ansprüche 1 bis 10, eine Kartonage zur Aufnahme dieses Stapels und eine Schrumpffolie, die die den Stapel enthaltene Kartonage dicht einhüllt.

14. Fußbodenkonstruktion, umfassend eine Unterkonstruktion aus einer Anzahl dicht nebeneinander angeordneter und an ihren Seitenkanten verbundener Trittschallplatten (12,14) gemäß einem der Ansprüche 1 bis 10 und einen darauf angeordneten Fußbodenbelag.

15. Fußbodenkonstruktion gemäß Anspruch 14, **dadurch gekennzeichnet, dass** die Unterkonstruktion aus Trittschallplatten (12,14) unmittelbar auf einem tragenden Unterboden (16) eines Raums, insbesondere auf einer Lastverteilerschicht aufliegt.
